(19) Europäisches Patentamt

European Patent Office

Office européen des brevets

(11) **EP 1 705 833 A1**

(12) **EUROPEAN PATENT APPLICATION**

(43) Date of publication:
27.09.2006 Bulletin 2006/39

(51) Int Cl.:
*H04L 12/26* (2006.01)

(21) Application number: 06111206.6

(22) Date of filing: 15.03.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 22.03.2005 GB 0505721

(71) Applicant: Agilent Technologies, Inc. - a Delaware
corporation -
Palo Alto, CA 94303-0870 (US)

(72) Inventors:
• Garcia, Francisco
South Queensferry, Lothian EH30 9TG (GB)
• Gardner, Robert
South Queensferry, Lothian EH30 9TG (GB)

(74) Representative: Coker, David Graeme
Agilent Technologies UK Ltd
Legal Department
Eskdale Road
Winnersh Triangle
Wokingham, Berkshire RG41 5DZ (GB)

(54) **Packet trace diagnostic system**

(57)      A packet trace diagnostic system (201) for monitoring and displaying packet transfers in a telecommunications network (400), especially so that faults or errors in the network can be detected quickly and easily, includes one or more monitoring probes (230) for monitoring data packets being transmitted along selected communications path, a processor (260) for predetermining acceptable data packet transfer characteristics, a measurement module (240) for measuring data packet transfer characteristics and a comparator (250) for comparing the measured data packet transfer characteristics to the predetermined acceptable packet transfer characteristics thereby enabling the identification of defective data packet transfers for the selected communications path. A user interface (220) can be used to input acceptable packet transfer characteristics and a display (270) may be used to display the results from the comparator (250) on a message sequence chart, such as a ladder diagram. One of the packet transfer characteristics being measured may be packet transmission delay variation or "jitter".

Fig. 2

**Description**

Background of the Invention

The present invention relates to a packet trace diagnostic system for monitoring and displaying packet transfers in a telecommunications network, more specifically, for monitoring and displaying a plurality of packet transfers between the same endpoints in order for faults or errors in the network to be quickly and easily detectable.

Some data communication networks, such as the Internet, employ packet switched technologies, where source data is split into packets. A packet can be defined by attributes such as, but not limited to, the departure time or creation time (from the transmitting entity), the arrival time (at the receiving entity), the source address of the packet, the destination address of the packet, the receiving entity (unique ID such as Media Access Control (MAC) address) and the packet type.

Often in packet switched data communication networks, such as the Internet, there is no single dedicated connection between communicating devices or entities. Each packet making up the source data may include a complete destination address and each one may be sent and routed independently. Other packet switched networks, such as Asynchronous Transfer Mode (ATM) networks, employ a virtual circuit, which is established at the start of a data transfer and packets are transferred via the same path until the end of the data transfer at which time the virtual circuit may be released.

A packet trace can be defined as a series or sequence of one or more related packet exchanges between two or more communicating entities e.g. routers. Packet trace examples include the exchange of Internet Protocol (IP) signalling packets that control a Mobile Internet Protocol version 6 (IPv6) handover, or the packet exchanges involved in a Session Initiation Protocol (SIP) transfer, or packets involving a file transfer using the File Transfer Protocol (FTP).

A packet trace may be considered to be similar to another packet trace if the packets forming an exchange sequence are of corresponding type, where corresponding source and destination addresses may each be identical or may be allowed to vary. The departure and arrival times may vary and the transmission time and receipt time are not necessarily appropriate criteria in these circumstances for determining similar packet traces.

A packet trace contains a series of timing points which are derived from creation or departure times and arrival times of packets at communicating entities. In some cases, a packet's creation time may be assumed to be practically identical to it's departure time from a particular element, but in other cases, depending on the type of network element, the creation time may be somewhat different to the departure time. Either of these timing points could be used and, although the description hereinafter will use departure time, it will be appreciated that creation time could, if desired, be used instead. A time delay between timing points may be caused by delays associated with transmitting packets between communicating entities, or processing delays at communicating entities, or delays incurred, such as timeouts, that are part of the packet processing / protocol algorithms.

Such packet switched data communications networks can involve quite complex routing and it can be difficult to monitor the message packets if different routes can be taken between entities. Transaction times may vary depending on the route taken and packets can be lost, or can be considered as lost, if they go undelivered for a certain length of time. It is therefore desirable to assess the transmission and receipt of messages along various communications paths quickly and in a manner which is easily understood by a network operator. Such monitoring of a system needs to be performed in real time, or otherwise to provide prompt analysis of a network. This can often be difficult in today's complex networks.

The present invention therefore seeks to provide a packet trace diagnostic system for monitoring and displaying packet transfers in a telecommunications network, which overcomes, or at least reduces the problems of the prior art.

Summary of the Invention

Accordingly, in a first aspect, the invention provides a packet trace diagnostic system for monitoring and displaying packet transfers in a telecommunications network, the packet trace diagnostic system comprising a control module for determining a packet trace to be monitored, the packet trace comprising a communications path between at least two communicating entities, the control module storing data packet transfer parameters relating to the determined packet trace, at least one monitoring module for monitoring data packets being transmitted along the communications path between the two communicating entities, a comparator module coupled to the monitoring module and the control module for comparing data packet transfer parameters for monitored data packets with the stored packet transfer parameters for determining whether the monitored data packets form part of a packet trace record relating to the packet trace to be monitored, a memory for storing such packet trace records, a display controller for normalising the stored packet trace records relating to the same packet trace, and a display for displaying the packet trace in the form of a diagram with each of the normalised packet trace records starting at the same point such that any differences between the normalised packet trace records are shown as jitter in the visualisation of the normalised packet trace records.

The packet trace diagnostic system may comprise a plurality of monitoring modules, and the or each monitoring module may comprises a filter module for filtering data packets in the communications path so as to monitor only those data packets with predetermined characteristics.

The filter module may be controlled by the control module to filter data packets having predetermined characteristics.

The or each monitoring module may comprise a compression module for compressing the data packet transfer parameters prior to communicating them to the comparator module.

In one embodiment, the or each monitoring module is at a location in the telecommunications network remote from the control module and the comparator module.

Similarly, the display may be at a location in the telecommunications network remote from the control module and the comparator module. The diagram may be a message sequence chart, such as so-called ladder diagram.

According to a second aspect, the invention provides a method of monitoring and displaying packet transfers in a telecommunications network, the method comprising the steps of determining a packet trace to be monitored, the packet trace comprising a communications path between at least two communicating entities, the control module storing data packet transfer parameters relating to the determined packet trace, a monitoring module for monitoring data packets being transmitted along the communications path between the two communicating entities, a comparator module coupled to the monitoring module and the control module for comparing data packet transfer parameters for monitored data packets with the stored packet transfer parameters for determining whether the monitored data packets form part of a packet trace record relating to the packet trace to be monitored, a memory for storing such packet trace records, a display controller for normalising the stored packet trace records relating to the same packet trace, and a display for displaying the packet trace in the form of a diagram with each of the normalised packet trace records starting at the same point such that any differences between the normalised packet trace records are shown as jitter in the visualisation of the normalised packet trace records.

The method may further comprise the step of filtering the data packets being transmitted along the communications path so that only selected data packets are monitored.

The step of displaying the packet trace may comprise the use of a message sequence chart, which is sometimes referred to as a ladder diagram.

The method may further comprise the step of obtaining using user inputs to predetermine acceptable data packet transfer characteristics for the communications path.

Brief Description of the Drawings

An exemplary embodiment of the invention will now be described, by way of example only, with reference to the accompanying drawings in which;

Figure 1 shows a schematic representation of a telecommunications network according to one embodiment of the present invention;

Figure 2 shows a schematic diagram of a packet trace diagnostic system according to one embodiment of the present invention;

Figure 3 shows a top level flow chart of a packet trace diagnostic system according to one embodiment of the present invention;

Figure 4 shows a flow chart representing steps taken during a learning phase of a packet trace diagnostic system according to one embodiment of the present invention;

Figure 5 shows a flow chart for an operational phase of a packet trace diagnostic system according to one embodiment of the present invention;

Figure 6 shows a message sequence chart displaying message transactions which represent a two-way handshake between two communicating identities according to one embodiment of the present invention;

Figure 7 shows a message sequence chart displaying four instances of similar message transactions which are used to display the result of a delay variation (jitter) calculation according to one embodiment of the present invention.

Detailed Description

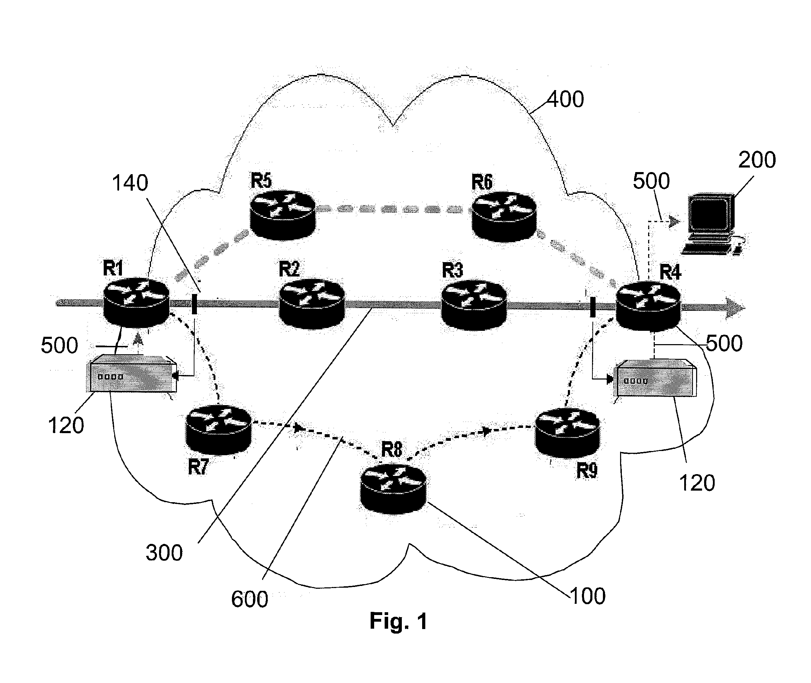

One embodiment of the present invention provides a packet trace diagnostic system. A schematic of a network 400 employing the packet trace diagnostic system is shown in Figure 1. In this embodiment of the present invention the packet trace diagnostic system is implemented on one or more computers such as a Unix Solaris (of which only one is shown), which can also act as the network's management system 200 (NMS) and one or more monitoring probes 120, which are distributed across the network at particular points of interest for monitoring packets.

The network 400 comprises a series of Routers 100 labelled R1 to R7, each of which is connected by a series of communication paths 600. The network 400 also comprises a particular path of interest 300, which comprises a series of communication paths 600 connecting Routers R1, R2, R3 and R4. The path of interest 300 is monitored by the monitoring probes 120 (in this case two such probes) arranged to monitor particular points 140 in the path of interest 300, depending on the protocol interaction to be analysed. Such monitoring probes may exist in hardware or firmware or software and may be standalone (as depicted in Fig. 1) or integrated inside network equipment. An example of the latter would be software that is integrated into the kernel of a running operating system - such as the addition of a dynamically loadable kernel module to a Linux kernel.

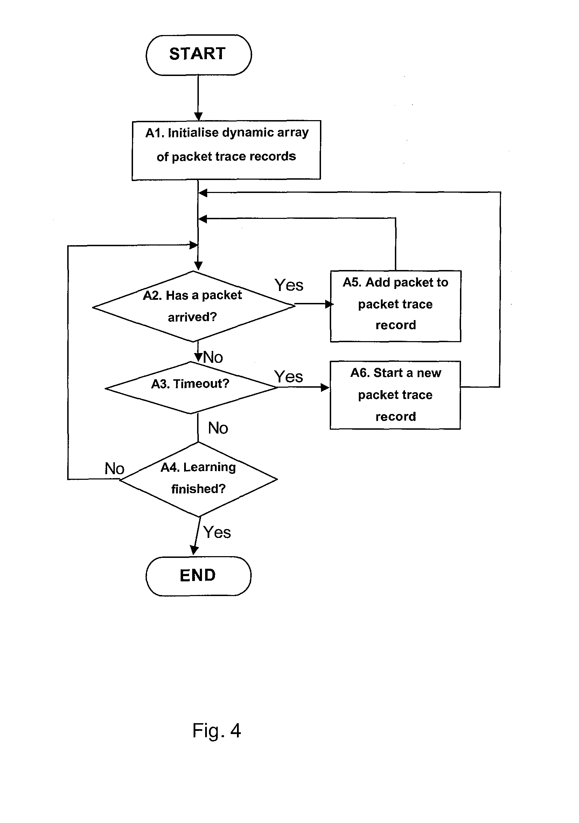

The monitoring probes 120 are arranged to connect to the NMS 200 by a connection 500, which may be direct, or may itself be via one or more of the Routers in the network 400, depending on the location of the monitoring probe. The NMS 200 may include a graphical user interface (GUI) for representing the resulting packet traces, as will be described below with reference to Figures 4, 5 and 6.

The packet trace diagnostic system, which can be implemented on the NMS 200 together with the monitoring probes 120, collates information about real-time or historical packet traces and can analyse a packet trace in order to detect potential problems or faults within a packet switched communications network e.g. IP network or Internet.

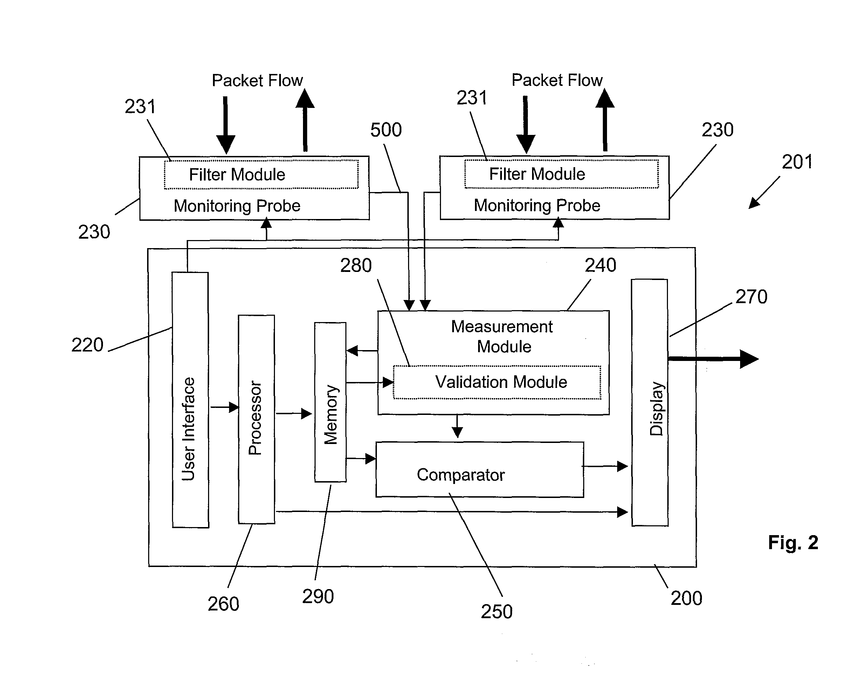

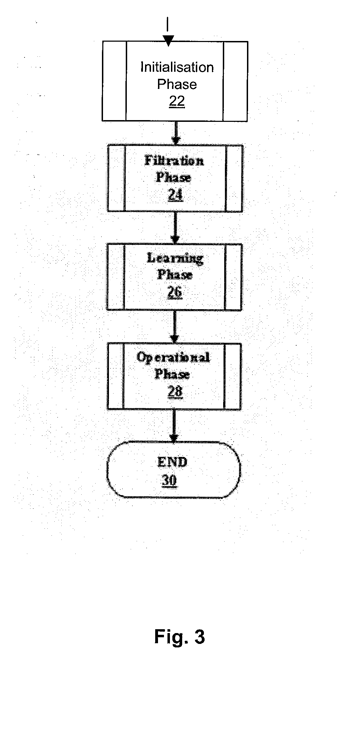

A high-level schematic of a packet trace diagnostic system 201 is described by reference to Figure 2. The packet trace diagnostic system 201 illustrated includes an NMS 200 and a pair of monitoring probes 230, which monitor packets which are being communicated along selected paths across a telecommunications network, or which can be used to monitor selected types of packets being communicated between certain elements, such as particular routers. Each of the monitoring probes 230 comprises a filter module 231, which can be configured from the NMS 200 to allow only relevant packets to be monitored, so that other packets, which may be transmitted along the same monitored path of the network, are blocked from being monitored. The filter module also provides accurate time stamps for each of the packets monitored as being relevant. The filtering of packets occurs during a filtration phase which is further described with reference to Figure 3 following. Each monitoring probe extracts relevant packet data from the relevant packets that have been allowed by the filter module and transfers the relevant packet data to the NMS 200. The packet data transferred to the NMS 200 may be compressed (or hashed), to reduce the load on the communication path 500.

The NMS 200 includes a user interface 220, through which a user, which may be a person, or possibly an automatic routine in the NMS or elsewhere that controls the packet trace diagnostic system, can configure, depending on user requirements, the NMS 200 and the monitoring modules 230 during an initiation phase of the packet trace diagnostic system 201, which is further described below by reference to Figure 3.

The NMS 200 further comprises a processor 260, which, during a learning phase, predetermines acceptable data packet transfer characteristics for a normal or valid packet trace for the selected communications path, as described further by reference to Figures 3 and 4. A memory module 290 can be used to store historical packet traces and predetermined acceptable data packet transfer characteristics for the selected communications path.

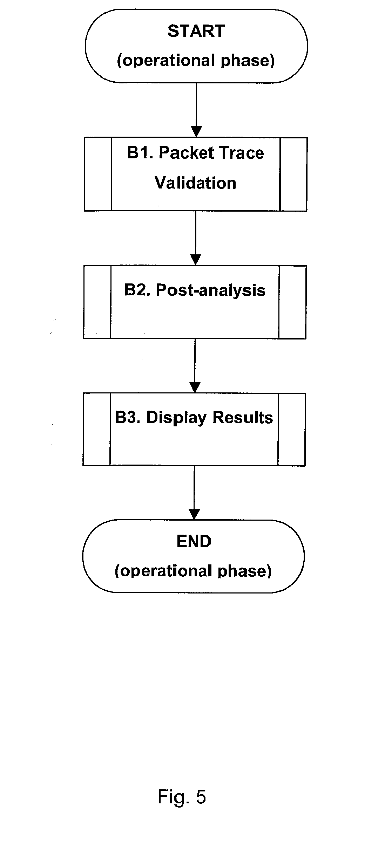

The NMS 200 further comprises a measurement module 240 which during an operational phase, which is described further by reference to Figures 3 and 5, receives the monitored packet data and measures data packet transfer characteristics for the selected communications path. The measurement module 240 further comprises a validation module 280, wherein a real-time or historical packet trace associated with an appropriate network protocol, can be validated. This is achieved by comparing the packet trace against what is considered a normal or valid packet trace, as determined by the processor 260 during the learning phase.

The NMS 200 further comprises a comparator 250, which compares the real-time or historical measured data packet transfer characteristics to the predetermined acceptable packet transfer characteristics, thereby enabling the identification of defective data packet transfers for the selected communications path. This is where the identification of packet loss, identification of excessive packet delay and a calculation of packet transmission delay variation (jitter) occurs. The comparator 250 is used to perform a post-validation step (B2) of the operational phase as described further below by reference to Figure 5.

A display 270 can be used to display the results of the comparator 250, or validation module 280. The display 270 is used for the presentation of the results of the packet trace diagnostic system 201, which are displayed on the GUI of the NMS, as described further by reference to Figures 5, 6 and 7. Alternatively, if desired, the display may be located elsewhere, at a location remote from the NMS.

A flow diagram 20 showing the various phases of use of a packet trace diagnostic system is shown in Figure 3. As previously described, the packet trace diagnostic system 201 can be used to monitor all data packets which are being communicated along a selected path across a telecommunications network, or can be used to monitor selected types of packets being communicated between certain elements, such as particular routers. The packet trace diagnostic system 201 can be configured according to user requirements during an initiation phase 22. The system 20, then moves to a filtration phase 24, a learning phase 26, and an operational phase 28, after which the packet trace diagnostic system 20 can be terminated 30, either automatically or by external user input.

The filtration phase 24 can be used to ensure that only relevant packets are assessed by the packet trace diagnostic system 20 and that other packets, which may be transmitted along the same monitored path of the network, are blocked from being analysed. During the learning phase 26, accepted characteristics for a normal or valid packet trace are determined, as described further by reference to Figure 4. During the operational phase 28, which is shown schematically in Figure 5, a real-time or historical packet trace associated with an appropriate network protocol, can be validated. This is achieved by comparing the packet trace against what is considered a normal or valid packet trace, as determined during the learning phase 26.

To compare packets during the filtration phase 24, learning phase 26 and operational phase 28 of the packet trace diagnostic system 20, packets are categorised by their various common characteristics. Timing points associated with each packet are used to determine what the normal operational limits of the network being monitored are considered to be and whether any transactions fall outside these boundaries.

The pertinent packet characteristics, which may be analysed by the packet trace diagnostic system 20 are: packet loss; packet transmission delay; and packet transmission delay variation (jitter). It is envisaged that in other embodiments of the invention other packet characteristics may be considered for analysis; for example, TCP/IP re-transmits. By identifying a packet or a number of packets having characteristics falling outside normal operating bounds, it may be possible to diagnose an existing or potential fault within the network being monitored. For example, if a series of packets communicated along the monitored path are noted to each have an unacceptable arrival time at their destination router, the packet trace diagnostic system 20 will be able to identify that a problem may exist somewhere on the path of interest. Further information regarding the packet characteristics, as collated by the packet trace diagnostic system 20, may be used to diagnose the problem more specifically. For example a problem with the TCP/IP window size may be identified, by assessing packet characteristics such as throughput.

In order to compare like packets within a data transfer it is necessary to determine if a packet is sequentially valid. A packet trace is deemed to be sequentially valid if each packet has the same or similar type as each respective packet in the valid packet trace, as manually specified in the initiation phase 22, or as determined during the learning phase 26. Optionally if each packet has the same source and destination addresses as each respective packet in the valid packet trace, as manually specified in the initiation phase 22, or as determined during the learning phase 26 a packet trace is also deemed to be sequentially valid. Furthermore, a packet trace is deemed to be temporally valid if it is sequentially valid and if the deviation of each timing point is within acceptable limits, when compared with each respective timing point determined during the learning phase 26.

The filtration phase 24 of the packet diagnostic system 20 may be required if numerous protocol conversations are occurring simultaneously on a monitored link. Only some of the packets may be relevant to the analysis taking place and therefore the filtration phase 24 allows a user to set optional packet filters to determine which packets will be forwarded through to the learning phase 26 in order to reduce the processing burden. Packets which pass the filtration criteria are forwarded to the next phase, the learning phase 26. For example, for a particular protocol it might be known what types of packets to expect which might be types A, B or C. What might not be easy to determine is the valid sequence(s) of these packets, so the packet trace diagnostic system 20 can be used. Under these circumstances, only known packet types (A, B and C) would be analyzed and all irrelevant packet types (D, E) which might be present on the same link would be blocked.

The learning phase 26 has two modes of operation, in the first of which timing points are learned for a packet trace whose sequential characteristics are known in advance. The first mode may be implemented using a standard finite state machine as is known in the art.

State transitions would occur as a result of packet arrivals and packet arrival times or packet creation times would be stored. If a valid packet has not arrived within a predefined time, a timeout is said to have occurred and the finite state machine would be reset to its starting state. If an invalid packet has arrived (e.g.. which did not conform to the packet trace sequence), the finite state machine would be reset to its starting state. Loops and branching may occur, representing alternative valid sequences. If the end state is reached, a sequentially valid packet trace has been identified. The learned timing information (packet arrival time or packet creation time) can be used to calculate acceptable time limits for temporally valid packet traces.

In order for the first mode of the learning phase 26 to be successful, it must be ensured that only sequentially valid packet traces are supplied as input. In addition, it must be possible to determine the start and end packets of distinct packets traces. This can be done using knowledge of the characteristics of packets at the end and at the start of a sequence, or using a time gap between traces, known as a "timeout".

In the second mode of the learning phase 26, timing points are learned for a packet trace whose sequential characteristics are not known in advance described further below with reference to Figure 4.

Figure 4 describes, by way of a flow chart, a second mode of operation of the learning phase 26. Arriving packets are stored in a packet trace record (dynamic array of packets). If no packet arrives within a predefined time, a timeout is said to occur, and a new packet trace record is started. The learning session ends on an interrupt signal. This is described further by the following steps of the flow chart:

**A1.** Initialise a dynamic array of packet trace records.

**A2**. Has a packet arrived?

If YES go to step A5

If NO go to step A3

**A3**. Has a packet timeout occurred? If a packet does not arrive within a certain period, known as a "timeout", it is assumed either that is is lost or that it was not sent in the first place. The value of this timeout must be selected according to the protocol(s) being analysed, normal network conditions and normal processing times at communicating entities.

If YES go to Step A6.

If NO go to Step A4.

**A4**. Is the learning finished?

If YES End.

If NO go to step A2

**A5.** Add a packet to packet trace, return to step A2.

**A6.** Start a new packet trace, return to step A2.

Using the results of this packet trace learning process, it is thus possible to create a directed graph on a display representing the various sequentially valid packet traces. The learned timing information (packet arrival time or packet creation time) can be used to calculate acceptable time limits for temporally valid packet traces.

In order to calculate acceptable time limits, it might be appropriate to calculate the standard deviation of the packet arrival/creation times and choose a multiple of the standard deviation as the limit.

Packet arrival/creation times may be against a fixed reference point, such as the sequence start time, or may be relative to the previous packet arrival/creation time e.g inter-packet arrival/creation times. The choice of whether to use absolute or relative measures is a matter for implementation.

Figure 5 shows a flow chart for the operational phase of a packet trace diagnostic system according to a first embodiment of the invention. In the operational phase 28 real time packet trace diagnosis is performed. This comprises the following three steps.

**B1.** Packet Trace Validation: this is where sequence and timing check of the incoming packets is performed. The packet trace validation can be implemented using finite state machines, similar to that previously described. The packet trace validation begins on the occurrence of a valid start packet and ends when a sequentially valid trace is identified, or if timeout occurs. A new finite state machine instance is invoked by each valid start packet. Two separate packet trace validation functions may be performed; packet trace sequential validation and packet trace temporal validation.

For packet trace sequential validation, the timeout transition indicates that a packet has been lost or not sent by the source and results in a transition to a separate END-FAIL state.

For packet trace temporal validation, the timeout transition is much shorter, indicating an excessively delayed packet and results in a transition to a separate END-FAIL state. The values for the timeouts are the acceptable time limits learned during the leaning phase, as described previously.

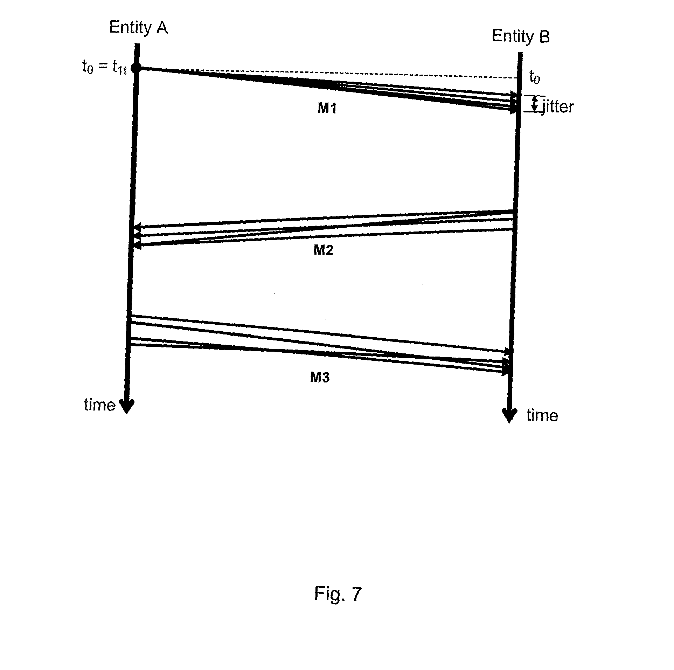

**B2.** Post-analysis: this is where identification of packet loss, identification of excessive packet delay and a calculation of packet transmission delay variation (jitter) occur. The analysis consists of the following functions: identifying the result of the packet trace sequential validation, i.e. if the result was a Pass or a Fail; identifying the result of the packet trace temporal validation, i.e. if the result was a Pass or a Fail; performing a packet transmission delay variation (jitter) calculation, which is described further by reference to Figure 7.

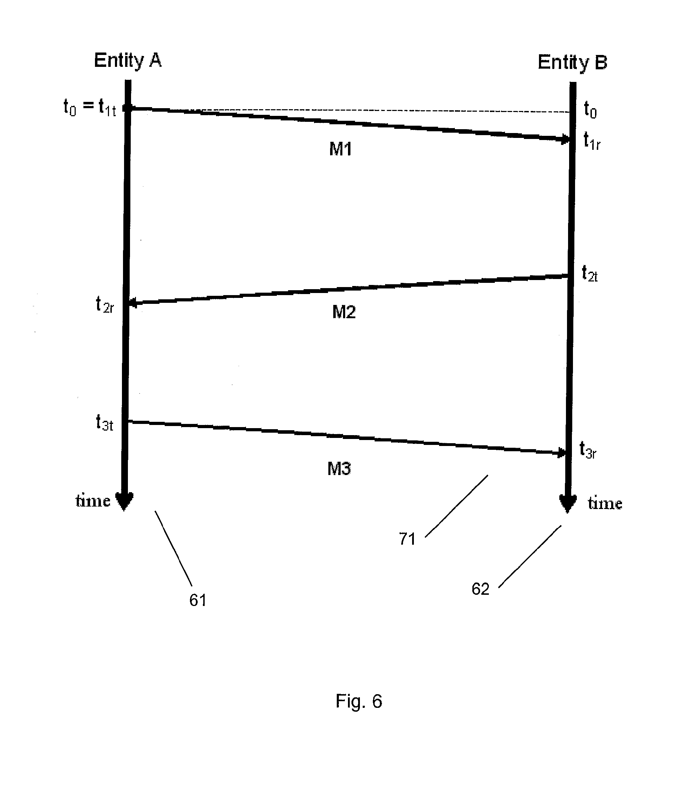

**B3**. Display Results: this is where the presentation of the results of the packet trace diagnosis are displayed on the GUI of the NMS, as described further with reference to Figures 6 and 7.

Figure 6 shows a message sequence chart (ladder diagram) displaying message transactions M1, M2, M3, which represent a two-way handshake between two communicating identities A, B according to one embodiment of the present invention. Uprights 61, 62 are used to represent horizontally-aligned and synchronised time axes and rungs 71 between the uprights 61, 62 are directed with the flow of communication. The starting point of each rung 71 represents the time of transmission (or creation or departure) from a first communicating entity A and the end point of each rung 71 represents the time of reception (arrival) at a second communicating entity B. For example a first message M1 is transmitted from entity A at $t_{1t}$. $t_{1t}$ becomes a reference point for all other transactions and may also be represented as to. The receipt of the first message M1 at entity B is recorded at time $t_{1r}$. The second message M2 is transmitted from entity B at $t_{2t}$ and received by entity A at $t_{2r}$. The relative timing points can be used to monitor the operation of a part of a telecommunications network. By representing message transactions in this way, packets which fall outside of accepted normal operating conditions can be quickly observed.

Figure 7 shows a message sequence chart displaying four instances of similar message transactions which are used to display the result of the packet transmission delay variation (jitter) calculation according to one embodiment of the present invention.

By plotting instances of similar message transactions on the same ladder diagram over a period of time, using the measured arrival/creation time of the first message as a timing reference point, the variation in departure (or creation) and arrival times will generally be observed on the ladder as a kind of 'fattening' of the rungs.

After a period of time, it may not even be possible to visually distinguish between the arrival/creation times of any of individual messages and the rung will appear as a solid band. In any case, if a statistically significant number of valid, similar transactions are plotted on the same ladder diagram it will be possible to read a value for the maximum/ minimum delay variation (jitter) associated with the departure (creation) and arrival time of each message, except the departure (creation) time of the first message, which is the timing reference point and will, by definition, show zero delay variation.

For example, by taking the times as measured at point X in Figure 7, and letting the set of arrival times of a series of messages at an entity be $t_1$, $t_2$, $t_3$ ... $t_n$ which may define a set S as:

$$S = \{t_1, t_2, t_3, \ldots, t_n\}$$

the following may also be defined:

$$t_{min} = min(S)$$

$$t_{max} = max(S)$$

$$\text{Mean } \mu = (t_1 + t_2 + t_3 + \ldots + t_n) / 4$$

$$\text{Variance } \sigma^2 = [ (t_1 - \mu)^2 + (t_2 - \mu)^2 + (t_3 - \mu)^2 + \ldots + (t_n - \mu)^2 ] / 4$$

$$\text{Standard Deviation} = \sigma$$

The delay variation may be expressed as the mean with a standard deviation:

$$(\mu, \ \sigma)$$

Alternatively, the delay variation may be expressed as the median point of the message times plus or minus a value for the delay variation value:

$$(t_{max} + t_{min}) / 2 \pm (t_{max} - t_{min}) / 2$$

Alternatively, the delay variation may be expressed as the mean of the message times plus an upper delay variation value and minus a lower delay variation value:

$$\mu + (t_{max} - \mu), \mu - (\mu - t_{min})$$

Alternatively, it may just be expressed as a scalar delay variation value with no particular reference point with respect to time.

$$(t_{max} - t_{min})$$

Any message transactions whose arrival/creation times differ from the acceptable variation range can be identified quite easily both visually and computationally. Using different colours for different message types may be used to enhance the visual aspect of the ladder diagram system, especially for more complex transactions.

It is envisaged that options regarding the statistical assessment of packet characteristics will be available for a user to select during the initiation phase of the packet trace diagnostic system. In this way the acceptable limits for a monitored path can be calibrated according to user requirements.

It is also envisaged that in other embodiments of the invention transactions between more than two communicating entities may be represented and that the ladder diagram may have as many or as few uprights, representing communicating entities, as required.

It will be obvious to one skilled in the art that many variations may be made without departing from the scope of the present invention. For example in other embodiments it is envisaged that the results of the analysis may be displayed in various different ways. Any PASS/FAIL results might best be displayed as a histogram with the percentage for PASS/FAIL printed on the bars. The delay variation (jitter) results may best be illustrated using a message sequence chart and a measure of the delay variation (jitter) at each of the timing points provided as an annotation.

It is also envisaged that a communications protocol can be correctly and efficiently monitored, allowing the visualisation of deviations from normal behaviour, helping a network operator to quickly identify incomplete sequences, or abnormal sequences, as well as time deviations. Normal behaviour being characterised using gathered historical data from a normal operation, setting bounds for normal valid message exchanges and assessing/analyzing data using statistical techniques. Abnormal behaviour could be assessed in real time, generating error alarms or alerting signals, providing forewarning of potential problems.

**Claims**

1. A packet trace diagnostic system for monitoring and displaying packet transfers in a telecommunications network, the packet trace diagnostic system comprising:

a control module for determining a packet trace to be monitored, the packet trace comprising a communications path between at least two communicating entities, the control module storing data packet transfer parameters relating to the determined packet trace;
at least one monitoring module for monitoring data packets being transmitted along the communications path between the two communicating entities;
a comparator module coupled to the control module and having an input for receiving data packet transfer parameters for monitored data packets the monitoring module and for comparing data packet transfer parameters for monitored data packets with the stored packet transfer parameters for determining whether the monitored data packets form part of a packet trace record relating to the packet trace to be monitored;
a memory for storing such packet trace records;
a display controller for normalising the stored packet trace records relating to the same packet trace; and

a display for displaying the packet trace in the form of a diagram with each of the normalised packet trace records starting at the same point such that any differences between the normalised packet trace records are shown as jitter in the visualisation of the normalised packet trace records.

2. A packet trace diagnostic system according to claim 1, comprising a plurality of monitoring modules.

3. A packet trace diagnostic system according to either claim 1 or claim 2, wherein the or each monitoring module comprises a filter module for filtering data packets in the communications path so as to monitor only those data packets with predetermined characteristics.

4. A packet trace diagnostic system according to claim 3, wherein the filter module is controlled by the control module to filter data packets having predetermined characteristics.

5. A packet trace diagnostic system according to any preceding claim, wherein the or each monitoring module comprises a compression module for compressing the data packet transfer parameters prior to communicating them to the comparator module.

6. A packet trace diagnostic system according to any preceding claim, wherein the or each monitoring module is at a location in the telecommunications network remote from the control module and the comparator module.

7. A packet trace diagnostic system according to any preceding claim, wherein the diagram comprises a message sequence chart.

8. A packet trace diagnostic system according to any preceding claim, wherein the display is at a location in the telecommunications network remote from the control module and the comparator module.

9. A method of monitoring and displaying packet transfers in a telecommunications network, the method comprising the steps of:

determining a packet trace to be monitored, the packet trace comprising a communications path between at least two communicating entities;
storing data packet transfer parameters relating to the determined packet trace;
monitoring data packets being transmitted along the communications path between the two communicating entities;
comparing data packet transfer parameters for monitored data packets with the stored packet transfer parameters for determining whether the monitored data packets form part of a packet trace record relating to the packet trace to be monitored;
storing such packet trace records;
normalising the stored packet trace records relating to the same packet trace; and
displaying the packet trace in the form of a diagram with each of the normalised packet trace records starting at the same point such that any differences between the normalised packet trace records are shown as jitter in the visualisation of the normalised packet trace records.

10. A method of monitoring and displaying packet transfers in a telecommunications network according to claim 9, further comprising the step of filtering the data packets being transmitted along the communications path so that only selected data packets are monitored.

11. A method of monitoring and displaying packet transfers in a telecommunications network according to either claim 9 or claim 10, wherein the step of displaying the packet trace comprises the use of a message sequence chart.

12. A method of monitoring and displaying packet transfers in a telecommunications network according to any one of claims 9, 10 or 11, further comprising the step of obtaining using user inputs to predetermine acceptable data packet transfer characteristics for the communications path.

**Fig. 1**

Fig. 2

Packet Flow

Packet Flow

231

231

230

201

Filter Module

Filter Module

Monitoring Probe

Monitoring Probe

230

500

220

280

240

270

Measurement
Module

User Interface

Processor

Memory

Validation Module

Display

Comparator

260

290

250

200

11

EP 1 705 833 A1

Initialisation
Phase
22

Filtration
Phase
24

Learning
Phase
26

Operational
Phase
28

END
30

Fig. 3

START

A1. Initialise dynamic array
of packet trace records

A2. Has a packet arrived? — Yes → A5. Add packet to packet trace record

No

A3. Timeout? — Yes → A6. Start a new packet trace record

No

A4. Learning finished? — No

Yes

END

Fig. 4

START
(operational phase)

B1. Packet Trace
Validation

B2. Post-analysis

B3. Display Results

END
(operational phase)

Fig. 5

Fig. 6

Entity A            Entity B

$t_0 = t_{1t}$      $t_0$

M1    jitter

M2

M3

time         time

Fig. 7

**European Patent Office**

**EUROPEAN SEARCH REPORT**

Application Number

EP 06 11 1206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/95053 A (OMEGON NETWORKS LTD; MITRANI, ROEE; HORN, LIOR; KEIDAR, URI; SIDI, MOS) 13 December 2001 (2001-12-13) * page 1, line 27 - page 2, line 2 * | 1-4,6, 8-10,12 | INV. H04L12/26 |
| A | * page 4, line 6 - page 6, line 19 * * page 10, line 12 - line 15 * * page 11, line 19 - line 24 * * page 12, line 11 - line 25 * ----- | 5,7,11 | |
| Y | US 5 648 965 A (THADANI ET AL) 15 July 1997 (1997-07-15) * column 2, line 20 - line 50; claims * ----- | 1-4,6, 8-10,12 | |
| Y | US 6 363 056 B1 (BEIGI MANDIS SADR MOHAMMAD ET AL) 26 March 2002 (2002-03-26) * column 2, line 47 - column 3, line 4 * * column 8, line 45 - line 65 * ----- | 1-4,6, 8-10,12 | |
| A | US 6 219 050 B1 (SCHAFFER STEPHEN J) 17 April 2001 (2001-04-17) * column 2, line 25 - column 3, line 6 * * column 5, line 52 - line 65; figure 2 * ----- | 1-4,6-12 | TECHNICAL FIELDS SEARCHED (IPC) H04L |

The present search report has been drawn up for all claims

| Place of search | Date of completion of the search | Examiner |
|---|---|---|
| Munich | 17 May 2006 | Ceccarini, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 705 833 A1**

## ANNEX TO THE EUROPEAN SEARCH REPORT
## ON EUROPEAN PATENT APPLICATION NO.

EP 06 11 1206

This annex lists the patent family members relating to the patent documents cited in  the above-mentioned European search report.
The members are as contained in the European Patent Office EDP file on
The European Patent Office is in no way liable for these particulars which are merely  given for the purpose of information.

17-05-2006

| Patent document cited in search report | | | Publication date | Patent family member(s) | | | Publication date |
|---|---|---|---|---|---|---|---|
| WO | 0195053 | A | 13-12-2001 | AU | 5060601 | A | 17-12-2001 |
| | | | | CA | 2411848 | A1 | 13-12-2001 |
| | | | | US | 6958977 | B1 | 25-10-2005 |
| US | 5648965 | A | 15-07-1997 | NONE | | | |
| US | 6363056 | B1 | 26-03-2002 | NONE | | | |
| US | 6219050 | B1 | 17-04-2001 | AU | 727628 | B2 | 14-12-2000 |
| | | | | AU | 8486998 | A | 10-02-1999 |
| | | | | CA | 2295537 | A1 | 28-01-1999 |
| | | | | EP | 0998802 | A1 | 10-05-2000 |
| | | | | JP | 2001511609 | T | 14-08-2001 |
| | | | | NZ | 502286 | A | 01-02-2002 |
| | | | | WO | 9904533 | A1 | 28-01-1999 |

EPO FORM P0459

For more details about this annex : see Official Journal of the European Patent Office, No. 12/82